(19) Europäisches Patentamt
European Patent Office
Office européen des brevets

(11) **EP 3 073 222 B1**

(12) **EUROPEAN PATENT SPECIFICATION**

(45) Date of publication and mention
of the grant of the patent:
**04.05.2022 Bulletin 2022/18**

(21) Application number: **16161910.1**

(22) Date of filing: **23.03.2016**

(51) International Patent Classification (IPC):
**G01C 5/00** *(2006.01)*     **G01S 17/46** *(2006.01)*

(52) Cooperative Patent Classification (CPC):
**G01C 5/005; G01S 17/46**

(54) **ALTIMETER USING IMAGING CAPABILITY**

HÖHENMESSER MIT BILDGEBUNGSFUNKTION

ALTIMÈTRE UTILISANT UNE CAPACITÉ D'IMAGERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2015 US 201514665294**

(43) Date of publication of application:
**28.09.2016 Bulletin 2016/39**

(73) Proprietor: **Rosemount Aerospace Inc.
Burnsville, MN 55306-4898 (US)**

(72) Inventor: **ELL, Todd A.
Savage, MN 55378 (US)**

(74) Representative: **Dehns
St. Bride's House
10 Salisbury Square
London EC4Y 8JD (GB)**

(56) References cited:
**US-A- 3 000 256     US-A- 4 948 258
US-A1- 2013 088 575**

- **LIEBE C C ET AL: "Three dimensional imaging
utilizing structured light", AEROSPACE
CONFERENCE, 2004. PROCEEDINGS. 2004 IEEE,
IEEE, PISCATAWAY, NJ, USA, vol. 4, 6 March
2004 (2004-03-06), pages 2647-2655,
XP010748388, DOI: 10.1109/AERO.2004.1368060
ISBN: 978-0-7803-8155-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

**1. Field of the Invention**

The present disclosure relates to altimetry, and more particularly to methods and systems for optical altimetry.

**2. Description of Related Art**

Altitude above ground level (AGL) is an important consideration for all aspects of flight. For example, during critical phases of flight, many systems may need an indication of AGL altitude to perform properly. Further, AGL is important for weapon systems requiring an accurate, reliable and well-controlled burst height. One way to determine AGL is to use active radar altimeters which send a radar signal to the ground. However, traditional systems are expensive and require valuable space. Such conventional methods and systems have generally been considered satisfactory for their intended purpose. However, conventional AGL signals can potentially be distorted, intercepted, or the like, and may be inaccurate. As a result, there is still a need in the art for improved AGL altimeters. The present disclosure provides a solution for this need.

US 4,948,258 discloses methods and means for remotely determining the range from a datum location to a surface and/or the profile of the surface.

US 3,000,256 A1 discloses an aircraft altitude measuring system.

Liebe C C et al "Three dimensional imaging utilizing structured light", AEROSPACE CONFERENCE 2004. PROCEEDINGS. 2004 IEEE, PISCATAWAY, NJ, USA, vol. 4, 6 March 2004 (2004-03-06), pages 2647 - 2655, XP010748388, DOI: 10.1109/AERO.2004.1368060 ISBN:978-0-7803-8155-1 discloses a method of remote sensing three dimensional structure of the proximity utilizing a laser, a holographic grating and a single regular CCD camera.

**SUMMARY OF THE INVENTION**

From a first aspect the invention provides an altimeter as claimed in claim 1. The camera can be a short wave infrared (SWIR) camera. The projected pattern can be a pseudo-random, fixed pattern.

The laser projector and camera can be fixedly attached such that resolution of the imaged pattern is scaleable to a resolution of the projected pattern. The image processor can be configured to control timing and repetition of the pattern emitted from the laser projector. The image processor can interface to a readout integrated circuit of the camera to control the exposure time and frame rate of the camera.

From a further aspect the invention provides a method for determining height above a surface as claimed in claim 7.The method can further include controlling the repetition rate of the projected pattern and exposure of the camera with the image processor.

These and other features of the systems and methods of the subject disclosure will become more readily apparent to those skilled in the art from the following detailed description of the preferred embodiments taken in conjunction with the drawings.

**BRIEF DESCRIPTION OF THE DRAWINGS**

So that those skilled in the art to which the subject disclosure appertains will readily understand how to make and use the devices and methods of the subject disclosure without undue experimentation, preferred embodiments thereof will be described in detail herein below with reference to certain figures, wherein:

Fig. 1 is a block diagram of an exemplary embodiment of an altimeter constructed in accordance with the present disclosure, showing a camera and laser projector connected to an image processor;
Fig. 2 is a schematic view of the altimeter of Fig. 1, showing a projected image from the laser projector compared to an image viewed by the camera at different heights; and
Fig. 3 is a schematic view of a ranging triangle, showing an optimal height as a relationship between a distance between correlation peaks of the projected and viewed image and a distance between the camera and laser projector of Fig. 1.

**DETAILED DESCRIPTION OF THE PREFERRED EMBODIMENTS**

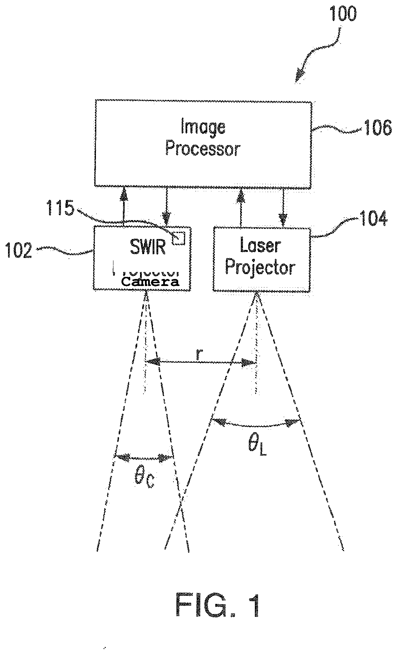

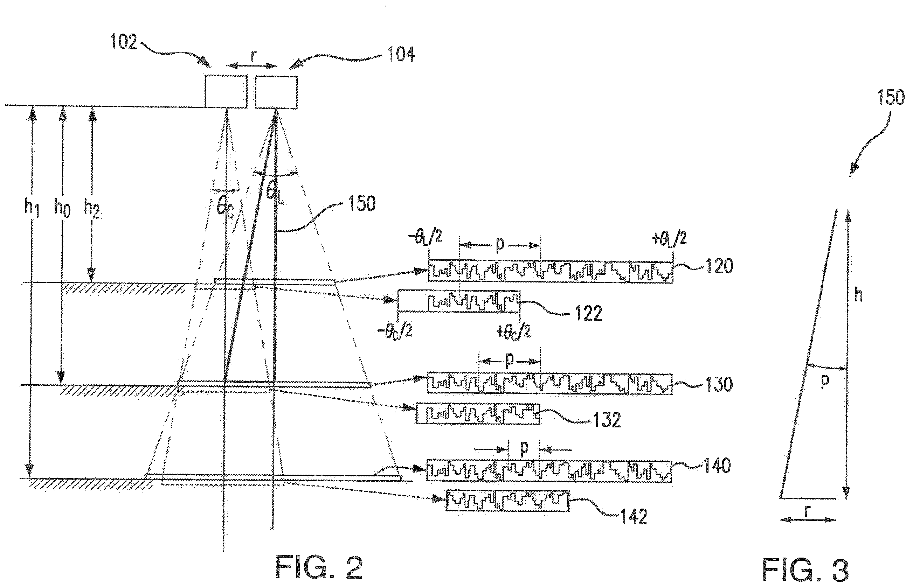

Reference will now be made to the drawings wherein like reference numerals identify similar structural features or aspects of the subject disclosure. For purposes of explanation and illustration, and not limitation, a partial view of an exemplary embodiment of an altimeter in accordance with the disclosure is shown in Fig. 1 and is designated generally by reference character 100. Other embodiments of the altimeter in accordance with the disclosure, or aspects thereof, are provided in Figs. 2-3, as will be described. The systems and methods described herein can be used for altimetry, e.g., to exploit a weapon's seeker imaging capability to perform a height of burst (HoB) function.

The altimeter 100 is depicted in Fig. 1 and includes a camera 102, a laser projector 104, and an image processing system 106 operatively connected to both the camera 102 and the laser projector 104. The processing system 106 processes images from the camera 102 and controls the timing of the laser projector 104. The camera 102 is a short wave infrared (SWIR) camera, however, other cameras that can process a laser image can be used. The total field-of-view of the camera is denoted $\theta_C$

and the total field-of view of the laser projector is denoted $\theta_L$. The camera 102 and the projector 104 are co-boresighted and have an offset displacement denoted as r. The laser projector 104 emits a single, fixed pattern, described below, which is viewed by the camera 102. The laser projector 104 can have a very low duty cycle and is active for very short durations (i.e., nanoseconds) at a varying repetition rate. The image processor 106 interfaces to the camera's 102 readout integrated circuit (ROIC) 115 to control the exposure time and frame rate of the camera 102. The image processor 106 is also capable of commanding the laser projector's 104 repetition rate and phasing relative to the camera's 102 exposure time. The image processor 106 also hosts a two-dimensional normalized cross-correlation algorithm, which attempts to register the images from the camera 102 as an expected pattern from the laser projector 104.

Fig. 2 depicts the overall operation of the altimeter of Fig. 1. Specifically, a pseudo-random (but fixed or predetermined) pattern 120 is projected onto the ground by an infrared laser of the laser projector 104 and viewed by the camera 102. The shift of the pattern in space is measured and then mapped to height through triangulation. Relying on this single-frame correspondence strategy, the altimeter 100 captures dynamic distance to the ground at the frame rate of the camera 102. Since the laser projector 104 and camera 102 are co-boresighted the projected pattern, as resolved on the ground, has the same resolution regardless of the height above the ground. The clarity of the pattern will degrade as the height increases due to distance-squared loss of laser energy and changes in the ground reflectivity as more of the ground surface is covered, but the pattern resolution scales with the camera's pixel resolution on the ground.

Shown in Fig. 2 is an example of projected patterns 120, 122, 124 across one row (or column) of the camera's image (from $-\theta_L/2$ to $+\theta_L/2$) and sub-portions of imaged patterns 122, 132, 142 as seen by the camera (from $-\theta_C/2$ to $+\theta_C/2$ ). At different heights, e.g., $h_0$, $h_1$, $h_2$, respectively, the resolution of the projected patterns 120, 130, 140 does not change, but which portion of the projected patterns 120, 130, 140 is seen by the camera 102 does, i.e., the imaged patterns 122, 132, 142 shift across the projected patterns 120, 130, 140 122, 124. The imaged patterns 122, 132, 142 are cross-correlated with the expected projection patterns 120, 130, 140, to determine the correlation output peaks when the patterns align. A peak distance is determined at the point when the patterns align. The peak distance is defined as the distance from the center of the projected pattern to the center of the imaged pattern and is denoted p, as shown in Fig. 3. A ranging triangle 150 (shown as a bold line in Fig. 2 and Fig. 3) can be used to determine the altitude or height above the surface using the peak distance. The ranging triangle 150 includes a distance between a center point of the camera and the center of the laser projector lens r. The altitude or height above the surface is determined based on a function between the centers and the peak distance, as shown in equation (1):

$$ h = \frac{r}{\tan p} \quad (1) $$

Ideally the projected patterns 120, 130, 140 would be such that no sub-portion of the pattern correlates with any other sub-portion of the pattern. One such pattern is called a Maximum Length Sequence (MLS). An MLS is pseudo-random sequence which has a sharp and strong auto-correlation peak when the patterns are aligned, but low auto-correlation everywhere else. Since a large number of samples (pixels) are used (across the entire length of the image), the resulting correlation peak can be resolved using a standard correlation method at a finer resolution than the camera's pixel ground sample distance (GSD).

A two-dimensional MLS pattern can be projected to increase the number of samples in the correlation, making the system more robust to corruption in the projected pattern. Further, if a normalized cross-correlation algorithm is used, then the correlation angle is less sensitive to ambient light background variations across the image. Although because the system controls both the laser source timing and the exposure timing of the camera, the exposure can be made very short, reducing ambient levels in the resulting image, yet still capturing the laser energy.

The projector's field-of-view is made larger than the camera's field-of-view ($\theta_L > \theta_C$) so that beyond a predefined distance (e.g., ho), the projected pattern spans the entire image taken by the camera. Although the cross-correlations at shorter distances will still work, the robustness and resolution of the correlation angle $\rho$ will be degraded as only a portion of the image contains the projected pattern.

A method for determining distance to a surface using the altimeter of Figs 1 and 2 includes projecting a pattern onto a surface from a laser projector, e.g., laser projector 104, and viewing the projected pattern using a camera, e.g., camera 102, to store an imaged pattern. The imaged pattern is cross-correlated with an expected pattern using an image processor, e.g., image processor 106, operatively connected to the laser projector and camera. Based on the imaged pattern and the expected pattern a correlation peak is determined such that a peak distance is defined between a center of the projected pattern and a center of the imaged pattern. An optimal height above the surface can be calculated as a function of a distance between the laser projector and the camera and the peak distance.

The methods and systems of the present disclosure, as described above and shown in the drawings, provide for an altimeter with superior properties including use of imagining capability. This, in-turn, makes the system more reliable as there would be fewer components susceptible to failure. While the apparatus and methods of the subject disclosure have been shown and described with reference to preferred embodiments, those skilled in the art will readily appreciate that changes and/or modifications may be made thereto without departing from the scope of the subject disclosure and within the bounds of the scope defined by the appended claims.

**Claims**

1. An altimeter (100) comprising:

    a laser projector (104) for projecting a pattern (120,130,140) onto a surface;
    a camera (102) for viewing the projected pattern (120,130,140); and
    an image processor (106) operatively connected to the laser projector (104) and camera (102) for determining distance to the surface based on cross-correlation of the projected and imaged patterns (120,130,140) (122,132,142), wherein the camera (102) and the projector (104) are co-boresighted and are separated by an offset distance (*r*), wherein the image processor (106) is configured to:

    determine a correlation peak between the imaged pattern (122,132,142) and the expected projected pattern indicating when the patterns align;
    define a peak distance (p) between a center of the projected pattern (120,130,140) and a center of the imaged pattern (122,132,142); and
    determine height (h) above the surface as a function of the offset distance (*r*), and the peak distance (p).

2. The altimeter of claim 1, wherein the camera (102) is a SWIR camera.

3. The altimeter of claim 1 or 2, wherein the pattern (120,130,140) is a pseudo-random, fixed pattern.

4. The altimeter of any preceding claim, wherein the laser projector (104) and camera (102) are fixedly attached such that resolution of the imaged pattern (122,132,142) is scaleable to a resolution of the projected pattern (120,130,140).

5. The altimeter of any preceding claim, wherein the image processor (106) is configured to control timing and repetition of the pattern (120,130,140) emitted from the laser projector (104).

6. The altimeter of claim 5, wherein the image processor (106) interfaces to a readout integrated circuit of the camera (102) to control the exposure time and frame rate of the camera (102).

7. A method for determining height above a surface, the steps comprising:

    projecting a pattern (120,130,140) onto a surface from a laser projector (104);
    viewing the projected pattern (120,130,140) using a camera (102) and storing an imaged pattern (122,132,142),
    wherein the camera (102) and the projector (104) are co-boresighted and are separated by an offset distance (*r*); and
    cross-correlating the imaged pattern (122,132,142) with the expected projected pattern using an image processor (106) operatively connected to the laser projector (104) and camera (102), **characterised in that** the method further comprises:
    determining a correlation peak of the imaged pattern (122,132,142) and the expected projected pattern indicating when the patterns align such that a peak distance (p) is defined between a center of the projected pattern (120,130,140) and a center of the imaged pattern (122,132,142); and
    calculating a height (h) above the surface as a function of the offset distance (*r*) and the peak distance (p).

8. The method of claim 7, further comprising controlling the repetition rate of the projected pattern (120,130,140) and exposure of the camera (102) with the image processor (106).

9. The method of claim 7 or 8, wherein the camera (102) is a SWIR.

**Patentansprüche**

1. Höhenmesser (100), umfassend:

    einen Laserprojektor (104) zum Projizieren eines Musters (120, 130, 140) auf eine Oberfläche;
    eine Kamera (102) zum Betrachten des projizierten Musters (120, 130, 140); und
    einen Bildprozessor (106), der wirksam mit dem Laserprojektor (104) und der Kamera (102) verbunden ist, zum Ermitteln des Abstands zur Oberfläche auf der Basis einer Kreuzkorrelation des projizierten und des abgebildeten Musters (120, 130, 140) (122, 132, 142), wobei die Kamera (102) und der Projektor (104) gemeinsam justiert sind und durch einen Versatzabstand (r) getrennt sind, wobei der Bildprozessor (106) so konfiguriert ist, dass er:

    eine Korrelationsspitze zwischen dem abgebildeten Muster (122, 132, 142) und dem erwarteten projizierten Muster ermittelt, die angibt, wann die Muster aufeinander ausgerichtet sind;

einen Spitzenabstand (p) zwischen einem Mittelpunkt des projizierten Musters (120,130, 140) und einem Mittelpunkt des abgebildeten Musters (122, 132, 142) definiert; und

eine Höhe (h) über der Oberfläche in Abhängigkeit vom Versatzabstand (r) und dem Spitzenabstand (p) ermittelt.

2. Höhenmesser nach Anspruch 1, wobei die Kamera (102) eine SWIR-Kamera ist.

3. Höhenmesser nach Anspruch 1 oder 2, wobei das Muster (120, 130, 140) ein pseudo-zufälliges, festgelegtes Muster ist.

4. Höhenmesser nach einem der vorstehenden Ansprüche, wobei der Laserprojektor (104) und die Kamera (102) starr befestigt sind, so dass eine Auflösung des abgebildeten Musters (122, 132, 142) auf eine Auflösung des projizierten Musters (120, 130, 140) skaliert werden kann.

5. Höhenmesser nach einem der vorstehenden Ansprüche, wobei der Bildprozessor (106) so konfiguriert ist, dass er die Zeitabstimmung und die Wiederholung des Musters (120, 130, 140), das vom Laserprojektor (104) ausgesendet wird, steuert.

6. Höhenmesser nach Anspruch 5, wobei der Bildprozessor (106) mit einer integrierten Leseschaltung der Kamera (102) gekoppelt ist, um die Expositionszeit und Bildrate der Kamera (102) zu steuern.

7. Verfahren zum Ermitteln einer Höhe über einer Oberfläche, wobei die Schritte Folgendes umfassen:

Projizieren eines Musters (120, 130, 140) auf eine Oberfläche von einem Laserprojektor (104);

Betrachten des projizierten Musters (120, 130, 140) unter Verwendung einer Kamera (102) und Speichern eines abgebildeten Musters (122, 132, 142),

wobei die Kamera (102) und der Projektor (104) gemeinsam justiert sind und durch einen Versatzabstand (r) getrennt sind; und

Kreuzkorrelieren des abgebildeten Musters (122, 132, 142) mit dem erwarteten projizierten Muster unter Verwendung eines Bildprozessors (106), der wirksam mit dem Projektor (104) und der Kamera (102) verbunden ist, **dadurch gekennzeichnet, dass** das Verfahren ferner Folgendes umfasst:

Ermitteln einer Korrelationsspitze des abgebildeten Musters (122, 132, 142) und des erwarteten projizierten Musters, die angibt, wann die Muster aufeinander ausgerichtet sind, so dass ein Spitzenabstand (p) zwischen einem Mittelpunkt des projizierten Musters (120,130, 140) und einem Mittelpunkt des abgebildeten Musters (122, 132, 142) definiert wird; und

Berechnen einer Höhe (h) über der Oberfläche in Abhängigkeit von dem Versatzabstand (r) und dem Spitzenabstand (p).

8. Verfahren nach Anspruch 7, ferner das Steuern der Wiederholungsrate des projizierten Musters (120, 130, 140) und der Exposition der Kamera (102) mit dem Bildprozessor (106) umfassend.

9. Verfahren nach Anspruch 7 oder 8, wobei die Kamera (102) eine SWIR ist.

## Revendications

1. Altimètre (100) comprenant :

un projecteur laser (104) pour projeter un motif (120, 130, 140) sur une surface ;
une caméra (102) pour visualiser le motif projeté (120, 130, 140) ; et
un processeur d'image (106) connecté de manière fonctionnelle au projecteur laser (104) et à la caméra (102) pour déterminer la distance à la surface sur la base de la corrélation croisée des motifs projetés et imagés (120, 130, 140) (122, 132, 142), dans lequel la caméra (102) et le projecteur (104) sont co-visés et sont séparés par une distance de décalage (r), dans lequel le processeur d'image (106) est configuré pour :

déterminer un pic de corrélation entre le motif imagé (122, 132, 142) et le motif projeté attendu indiquant quand les motifs s'alignent ;
définir une distance de crête (p) entre un centre du motif projeté (120, 130, 140) et un centre du motif imagé (122, 132, 142); et
déterminer la hauteur (h) au-dessus de la surface en fonction de la distance de décalage (r), et la distance de crête (p).

2. Altimètre selon la revendication 1, dans lequel la caméra (102) est une caméra SWIR.

3. Altimètre selon la revendication 1 ou 2, dans lequel le motif (120, 130, 140) est un motif fixe pseudo-aléatoire.

**4.** Altimètre selon une quelconque revendication précédente, dans lequel le projecteur laser (104) et la caméra (102) sont fixés de manière fixe de sorte que la résolution du motif imagé (122, 132, 142) peut être mise à l'échelle à une résolution du motif projeté (120, 130, 140).

**5.** Altimètre selon une quelconque revendication précédente, dans lequel le processeur d'image (106) est configuré pour commander la synchronisation et la répétition du motif (120, 130, 140) émis par le projecteur laser (104).

**6.** Altimètre selon la revendication 5, dans lequel le processeur d'image (106) s'interface avec un circuit intégré de lecture de la caméra (102) pour commander le temps d'exposition et la cadence de prise de vue de la caméra (102).

**7.** Procédé pour déterminer la hauteur au-dessus d'une surface, les étapes comprenant :

la projection d'un motif (120, 130, 140) sur une surface à partir d'un projecteur laser (104) ;
la visualisation du motif projeté (120, 130, 140) à l'aide d'une caméra (102) et le stockage d'un motif imagé (122, 132, 142),
dans lequel la caméra (102) et le projecteur (104) sont co-visés et sont séparés par une distance de décalage (r) ; et
la corrélation croisée du motif imagé (122, 132, 142) avec le motif projeté attendu à l'aide d'un processeur d'image (106) connecté de manière fonctionnelle au projecteur laser (104) et à la caméra (102), **caractérisé en ce que** le procédé comprend en outre :

la détermination d'un pic de corrélation du motif imagé (122, 132, 142) et du motif projeté attendu indiquant quand les motifs s'alignent de sorte qu'une distance de crête (p) est définie entre un centre du motif projeté (120, 130, 140) et un centre du motif imagé (122, 132, 142) ; et
le calcul d'une hauteur (h) au-dessus de la surface en fonction de la distance de décalage (r) et la distance de crête (p).

**8.** Procédé selon la revendication 7, comprenant en outre la commande du taux de répétition du motif projeté (120, 130, 140) et l'exposition de la caméra (102) avec le processeur d'image (106) .

**9.** Procédé selon la revendication 7 ou 8, dans lequel la caméra (102) est une caméra SWIR.

FIG. 1

FIG. 2

FIG. 3

EP 3 073 222 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4948258 A

- US 3000256 A1

### Non-patent literature cited in the description

- Three dimensional imaging utilizing structured light. **LIEBE C C et al.** AEROSPACE CONFERENCE 2004. PROCEEDINGS. IEEE, 06 March 2004, vol. 4, 2647-2655